# EUROPÄISCHE PATENTSCHRIFT

(11) **EP 1 594 654 B1**
(45) Veröffentlichungstag und Bekanntmachung des Hinweises auf die Patenterteilung: **26.07.2006**
(21) Anmeldenummer: 04709191.3
(22) Anmeldetag: 09.02.2004
(51) Int. Cl.: B24B 5/36, B24B 49/16

(54) **VERFAHREN UND VORRICHTUNG ZUM MASCHINELLEN ABRAUHEN VON ABGENUTZTEN REIFEN**
METHOD AND DEVICE FOR MECHANICALLY BUFFING WORN-DOWN TIRES
PROCEDE ET DISPOSITIF POUR RAPER A LA MACHINE DES PNEUS USES

(30) Priorität: 17.02.2003 DE 10306741
(43) Veröffentlichungstag der Anmeldung: 16.11.2005
(73) Patentinhaber: Collmann GmbH & Co. Spezialmaschinenbau KG, 23558 Lübeck (DE)
(72) Erfinder: KUHN, Jürgen, 23866 Nahe (DE)
(74) Vertreter: Hemmer, Arnd
(86) Internationale Anmeldenummer: PCT/DE2004/000216
(87) Internationale Veröffentlichungsnummer: WO 2004/071750

(56) Entgegenhaltungen:
- EP-A- 0 514 162
- US-A- 5 307 854
- US-A- 6 086 452
- US-B1- 6 386 024
- DATABASE WPI Week 199706 Derwent Publications Ltd., London, GB; AN 1997-060791 XP002287071 -& JP 08 309881 A (BRIDGESTONE CORP), 26. November 1996 (1996-11-26)

## Beschreibung

Die Erfindung geht aus von einem Verfahren und von einer Vorrichtung gemäß dem Oberbegriff des Patentanspruchs 1 bzw. des Patentanspruchs 15.

Abgenutzte Luftreifen, im Folgenden nur Reifen genannt, insbesondere Reifen für Flugzeuge, aber auch für Lastkraftwagen (LKW) und Personenkraftwagen (PKW), werden häufig wieder verwandt, nachdem sie im Bereich ihrer Lauffläche einer so genannten Runderneuerung unterzogen worden sind. Hierzu werden die abgenutzten Reifen zunächst einer Rauhbehandlung unterworfen, d. h. das noch vorhandene Laufflächenmaterial wird abgerauht, um den so vorbereiteten Restreifen mit einem neuen Laufflächenmaterial zu versehen, das nach seiner Aufbringung mit der gewünschten Reifenprofilierung versehen wird.
Insbesondere bei Flugzeugreifen besteht das Problem, dass sie aufgrund ihrer Unrundheit bzw. Ovalität, die sie während der Zeit ihrer Nutzung erfahren haben, nur sehr zeitaufwändig und umständlich abgerauht werden können. Die Ovalität dieser Reifen resultiert aus der Tatsache, dass die Reifen insbesondere bei der Landung eines Flugzeuges in sehr kurzer Zeit auf eine sehr hohe Geschwindigkeit von etwa 300 km/h beschleunigt werden und sich hierbei stark erhitzen, wonach die Reifen beim Stillstand des Flugzeuges eine unrunde bzw. ovale Form annehmen. Diese unrunde Form behalten die Reifen nach ihrer Abkühlung bei, wenn das Flugzeug nach der Landung längere Zeit, z. B. zwei Tage, auf dem Flugplatz steht, so dass seine Reifen dann für die weitere Nutzung die unrunde bzw. ovale Form beibehalten, die danach während ihrer Rotation zum so genannten Höhenschlag (run-out) führt. Ein weiterer Grund für die Unrundheit der Reifen ist durch die so genannten Flatspots des Reifens gegeben. Diese Flatspots sind im Wesentlichen flache, d. h. im Wesentlichen ebene Aufsetzzonen des Reifens, die der Reifen beim Aufsetzen des Flugzeuges auf der Landebahn erhält, indem sich Reifenmaterial an diesen Aufsetzzonen abschleift bzw. verbrennt, was als Rauchfahne sichtbar ist.

Die während ihrer Nutzung erlittene Unrundheit der Reifen, insbesondere ihre Ovalität, führt zu einer komplizierten und zeitaufwändigen Abrauhbehandlung. Hierzu wird ein unrunder Reifen, d. h. sein Restlaufflächenmaterial, mittels eines maschinellen Rauhwerkzeuges in Umfangsrichtung zunächst automatisch kreisrund abgerauht (erster Rauhvorgang), und zwar soweit, dass die vielen, im Reifen üblicherweise vorhandenen, als Reifenverstärkung wirksamen Karkasseinlagen nicht beschädigt werden, indem über der obersten Karkasseinlage eine später noch abzurauhende Restgummischicht stehen bleibt. Diese Restgummischicht ist dann erreicht, wenn die beiden üblichen, sich mit einem gewissen Abstand über der obersten Karkasseinlage befindenden und sich in Reifenumfangsrichtung erstreckenden Kontrolleinlagen bei dem Rundrauhvorgang mit abgerauht worden sind. Diese Restgummischicht ist nun jedoch wegen der im Reifenbetrieb erlittenen Ovalität der Karkasseinlagen in Reifenumfangsrichtung nicht mehr gleichmäßig dick. Daher wird dann mit einem Handwerkzeug auf der vorgerauhten Reifenfläche in der Mittelebene des Reifens und in dessen Umfangsrichtung mit Abstand voneinander eine Mehrzahl von quer verlaufenden Kontrollkerben angebracht, derart, dass die oberste Karkasseinlage sichtbar, jedoch nicht zerstört wird. Sodann wird mit einem handgeführten Maschinenrauhwerkzeug ein Nachrauhvorgang (zweiter Rauhvorgang) vorgenommen, um die Restgummischicht weiter abzurauhen, und zwar unter genauer augenscheinlicher Beobachtung der Kontrollkerben durch die den Rauhvorgang durchführende Bedienungsperson, so dass die oberste Karkasseinlage auch zwischen den Kontrollkerben nicht zerstört wird. Nach diesem zweiten Rauhvorgang befindet sich über der obersten Karkasseinlage eine im Wesentlichen gleichmäßig dicke und relativ dünne Endgummischicht, deren Umfangskontur ebenfalls der Ovalität der Karkasseinlagen entspricht. Der so zeitaufwändig und für die mit dem Abrauhen befasste Person arbeitsreich vorbereitete Reifenrohling ist nun für das Aufbringen eines neuen Laufflächenmaterials, welcher Vorgang nicht Gegenstand der vorliegenden Erfindung ist, geeignet.

Die Druckschrift EP 514162 - A beschreibt eine Vorrichtung zum Abrauen von Laufflächenmaterial, die einen optischen Sensor, eine Kamera und einen Image-Prozessor zur Steuerung eines Rauhwerkzeugs aufweist.

Ein Verfahren zum Reifenabrauhen wird hierbei offenbart.

Die Aufgabe der Erfindung besteht in der Verbesserung des Verfahrens und der Vorrichtung der einleitend angeführten Art dahingehend, dass das in Bezug auf die oberste Karkasseinlage äquidistante Abrauhen von noch vorhandenem Reifenlaufflächenmaterial des abgenutzten Reifens, der während seiner Nutzung seine Kreisform verloren hat, zeitlich wesentlich verkürzt und vereinfacht sowie für die mit dem Abrauhen befasste Person mit weniger Rauhstaubbelastung durchgeführt werden kann.

Die Lösung dieser Aufgabe bezüglich des Verfahrens ist in dem Patentanspruch 1 angeführt. Die Lösung dieser Aufgabe bezüglich der Vorrichtung ist in dem Patentanspruch 15 angegeben.

Mit der vorstehend angegebenen Erfindung wird insbesondere der Vorteil erreicht, dass das in Bezug auf die oberste Karkasseinlage eines abgenutzten Reifens äquidistante Abrauhen von Laufflächenmaterial des Reifens in wesentlich kürzerer Zeit als bisher erfolgt. Abhängig von der jeweiligen Reifengröße beträgt die Zeitdauer für das Abrauhen nach dem Stand der Technik etwa 25 Minuten, während es mit der erfindungsgemäßen Lösung innerhalb einer Zeitspanne von etwa 5 bis 7 Minuten möglich ist. Insbesondere ist nun für die gesamte Rauhbehandlung des Reifens nur noch ein einziger Rauhvorgang erforderlich, wobei das Ziel erreicht wird, dass der Reifen in Umfangsrichtung oval äquidistant abgerauht wird, so dass die Endschicht des Reifenlaufflächenmaterials, die für die Aufbringung von neuem Reifenlaufflächenmaterial erforderlich ist, über der obersten Karkasseinlage eine gleichmäßige Dicke aufweist. In Verbindung mit dem Aufbringen von neuem Reifenlaufflächenmaterial auf den abgerauhten Reifen wird dann später die Kreisrundheit des Reifens wieder hergestellt, wobei dann auch die Karkasseinlagen wieder eine Kreisform aufweisen.

Ein weiterer Vorteil der erfindungsgemäßen Lösung besteht darin, dass die mit dem Abrauhen befasste Person in einem wesentlich geringeren Maße der beim Abrauhen gegebenen Rauhstaubbelastung ausgesetzt ist, da der handgeführte Rauhvorgang nun entfällt, weil nur noch ein einziger, automatischer und nur maschineller Rauhvorgang durchgeführt wird, während-dessen die Bedienungsperson eine andere Rauhmaschine für einen erfindungsgemäßen Rauhvorgang vorbereiten bzw. andere Tätigkeiten verrichten kann. Da nur noch ein einziger Rauhvorgang erforderlich ist, wird zum Betrieb der mit dem Rauhvorgang befassten Maschine des Weiteren eine beträchtliche Energiemenge zum Betrieb der Rauhmaschine eingespart.

Eine vorteilhafte Ausführungsform des erfindungsgemäßen Verfahrens besteht darin, dass die gewünschte Anzahl und die Winkelposition der Kontrollkerben gespeichert wird, dass entsprechend der gewählten Anzahl und Winkelposition der Kontrollkerben ein aufeinander folgendes Anzeigen von gleich vielen optischen Markierungen auf der abgenutzten Lauffläche des Reifens und der Drehung desselben erfolgt, dass die angezeigten optischen Markierungen den gewählten Winkelpositionen für die Kontrollkerben zugeordnet und diese Zuordnung gespeichert wird, und dass das Einarbeiten der Kontrollkerben mittels eines Handwerkzeuges an den optisch angezeigten Markierungen erfolgt.

Eine weitere vorteilhafte Ausgestaltung des erfindungsgemäßen Verfahrens besteht darin, dass die eingearbeiteten Kontrollkerben zum Erhalt von Messdaten von deren tiefstem Punkt optisch ausgemessen werden und dass diese Messdaten rechnergestützt ausgewertet werden, um daraus Einstellwerte für die Rauhtiefen-Einstellbewegung des automatisch geführten Rauhwerkzeuges während des sich drehenden Reifens zu bestimmen.

In einer noch weiteren vorteilhaften Ausgestaltung des erfindungsgemäßen Verfahrens kann so vorgegangen werden, dass zum Anzeigen der optischen Markierungen auf dem Reifen und zum optischen Ausmessen der Kontrollkerben Laserstrahlen verwendet werden.

Eine vorteilhafte Ausführungsform der erfindungsgemäßen Rauhvorrichtung besteht darin, dass die erste optische Einrichtung ein erstes Gerät zum Erzeugen einer ersten Lichtlinie und ein zweites Gerät zum Erzeugen einer zweiten, die erste Lichtlinie kreuzenden Lichtlinie aufweist, um eine Kreuzmarkierung auf der Reifenlauffläche zu erzeugen. In vorteilhafter Weitergestaltung bestehen die beiden Geräte zum Erzeugen der jeweiligen Lichtlinie aus Lasergeräten.

In noch weiterer vorteilhafter Ausbildung der erfindungsgemäßen Rauhvorrichtung ist die zweite optische Einrichtung ein Reflexionsmessgerät zur Ausmessung der Tiefe der Kontrollkerben. Auch dieses Reflexionsmessgerät kann ein Lasergerät sein.

Die Erfindung ist nachstehend anhand eines in den anliegenden Zeichnungen dargestellten Ausführungsbeispieles näher erläutert. Es zeigen:
- Fig. 1: eine Aufsicht auf eine schematisch und vereinfacht dargestellte Rauhmaschine,
- Fig. 2: eine Seitenansicht auf die Rauhmaschine nach Fig. 1,
- Fig. 3: eine perspektivische Teilansicht auf einen abzurauhenden Reifen,
- Fig. 4: einen Teilschnitt nach der Linie IV-IV in Fig. 3,
- Fig. 5: eine Steuerkurve zur automatischen Steuerung des Rauhwerkzeuges bezüglich seiner erfindungsgemäßen Rauhtiefen -Einstellbewegung.

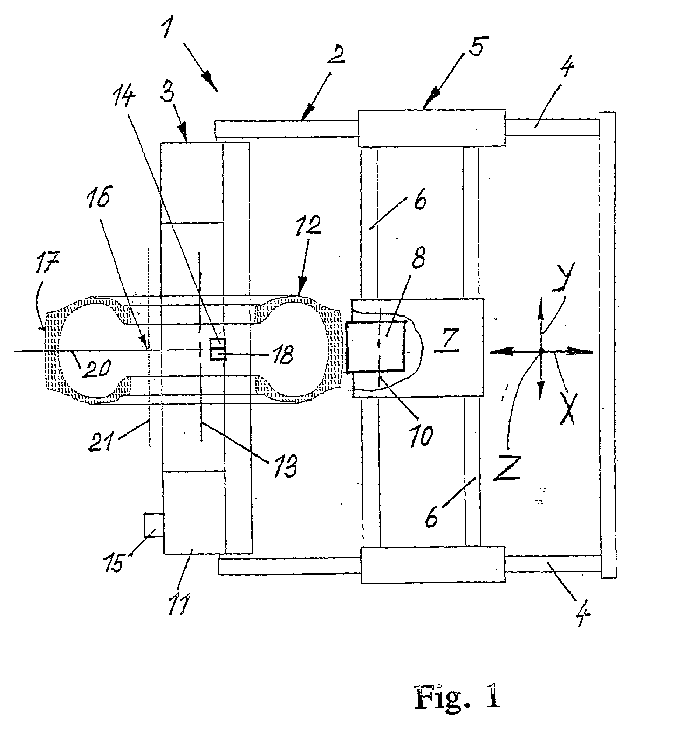

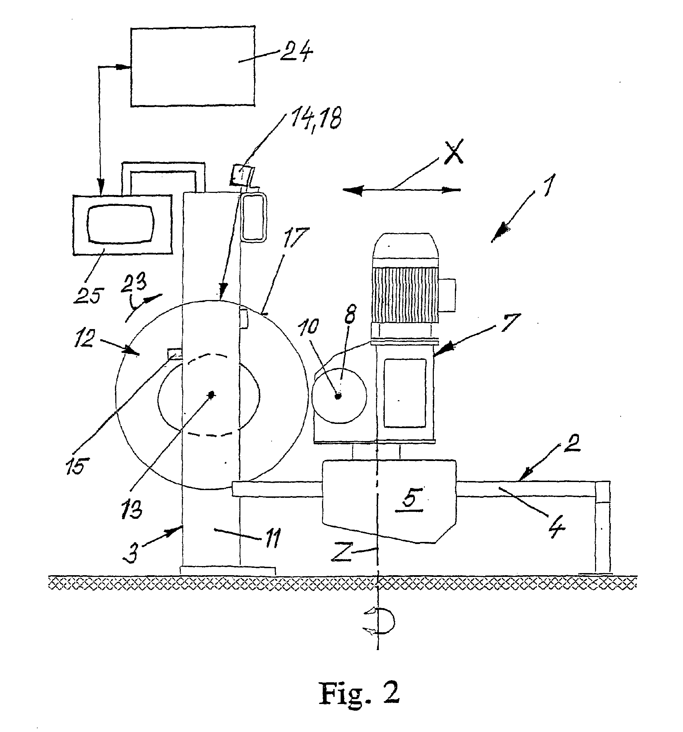

Zum besseren Verständnis des Verfahrens ist zunächst die in den Figuren 1 und 2 beispielsweise dargestellte Rauhvorrichtung beschrieben.

Nach den Figuren 1 und 2 umfasst die allgemein mit 1 bezeichnete Rauhmaschine einen ersten, im Wesentlichen horizontalen Rahmenbereich 2 und einen zweiten, im Wesentlichen vertikalen Rahmenbereich 3. Der Rahmenbereich 2 weist zwei horizontale Führungen 4 für einen darauf verfahrbaren Schlitten 5 auf. Der auf den Führungen 4 verfahrbare Schlitten 5 weist zwei zueinander parallele Führungen 6 auf, auf welchen ein automatisch gesteuertes Rauhaggregat 7 verfahrbar ist. Das Rauhaggregat 7 weist ein zylindrisches Rauhwerkzeug 8 auf, das motorisch um eine horizontale Achse 10 drehend angetrieben wird.

Das Rauhaggregat 7 wird gemäß der in Fig. 1 dargestellten Bewegungsachsendarstellung X, Y, Z in seinen Bewegungen programmiert und rechnergestützt automatisch gesteuert, so dass das maschinelle Rauhwerkzeug 8 außer seiner eigenen Rotation auch die Bewegungen um die Achsen X, Y, Z ausführt. Während der motorisch angetriebene Schlitten 5 über die Führungen 4 in üblicher Weise die Bewegungen des Rauhaggregates 7 entlang der X-Achse bewirkt, werden die Bewegungen des motorisch angetriebenen Aggregates 7 entlang der Y-Achse durch die Führungen 6 erreicht. Die Drehverstellung des Aggregates 7 und damit die Drehverstellung des maschinellen Rauhwerkzeuges 8 wird in üblicher Weise durch die Drehbewegung des Aggregates 7 um die Z-Achse erreicht. Zum Verständnis ist die Z-Achse in Fig. 2 deutlicher dargestellt.

Zusätzlich zu den vorgenannten Bewegungen des Rauhaggregates 7 um die genannten Achsen wird die Bewegung des Rauhaggregates und damit von dessen maschinellem Werkzeug 8 entlang der X-Achse noch erfindungsgemäß variiert, wie noch klar wird.

Der vertikale Maschinenbereich 3 der Raummaschine 1 umfasst in bekannter Weise einen rechteckigen Rahmen 11, innerhalb dessen ein zu rauhender Reifen 12 in bekannter Weise eingespannt ist (die Einspannwerkzeuge sind nicht dargestellt)und um eine horizontale Achse 13 drehbar angetrieben wird. Die horizontale Achse 13 des Reifens 12 und die horizontale Achse 10 des Rauhwerkzeuges 8 befinden sich vorteilhaft auf gleicher Höhe, wie Fig. 2 zeigt.

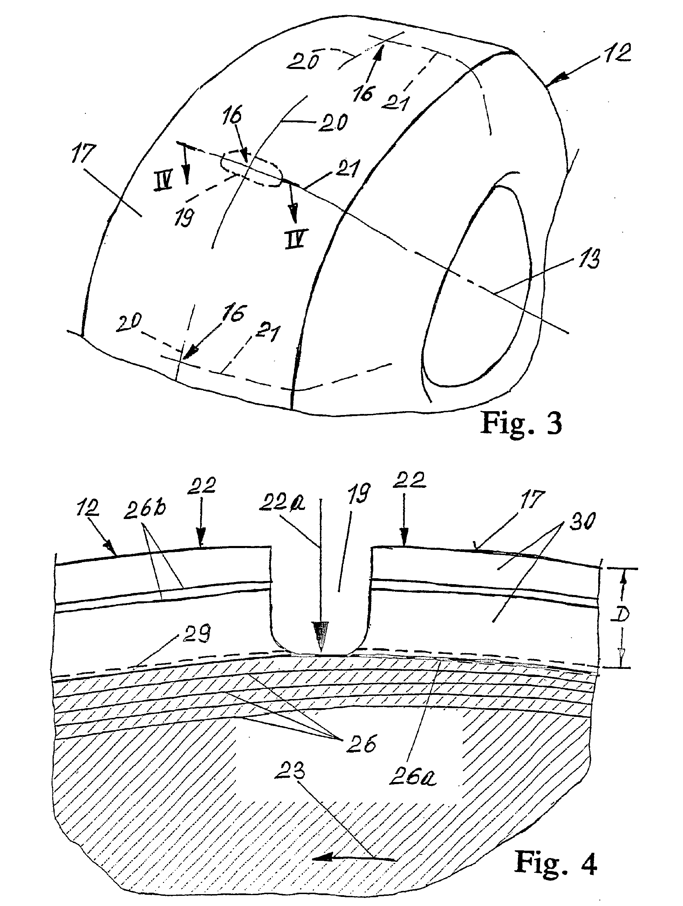

Des Weiteren ist die Rauhmaschine 1 mit einer ersten optischen Einrichtung 14, 15 zur Erzeugung und Anzeige einer optischen Markierung 16 auf dem Reifen 12, d. h. auf seiner Lauffläche 17, und mit einer zweiten optischen Einrichtung 18 zum automatischen Ausmessen von Kontrollkerben 19 (Fig. 3 und 4), die auf der Lauffläche 17 des Reifens eingearbeitet werden, versehen.

Die erste optische Einrichtung besteht aus einem ersten Gerät 14 zum Erzeugen einer ersten Lichtlinie 20 auf der Reifenlauffläche, und zwar innerhalb der Reifenmittelebene, und aus einem zweiten Gerät 15 zum Erzeugen einer zweiten Lichtlinie 21, welche die erste Lichtlinie kreuzt, um die gesamte Markierung 16 auf der Reifenlauffläche anzuzeigen. Diese beiden Geräte 14, 15 sind bevorzugter Weise Lasergeräte, deren Licht linienförmig auf den Reifen 12 projiziert wird.

Die zweite optische Einrichtung 18 ist vorzugsweise ein Reflexionsmessgerät, das zur Ausführung einer Reflexionsmessung einen Messstrahl 22 (Fig. 4) aussendet und diesen nach Reflexion von der Reifenlauffläche des sich in Richtung des Pfeiles 23 drehenden Reifens wieder empfängt. Das Reflexionsmessgerät ist vorteilhafter Weise ein Lasergerät.

Das erste Gerät 14 der ersten optischen Einrichtung ist z. B. oberhalb des Reifens 12 am Rahmen 11 der Rauhmaschine montiert, derart, dass die von ihm ausgesandte Lichtlinie 20 mit der Reifenmittelebene zusammenfällt. Das zweite Gerät 15 der ersten optischen Einrichtung ist z. B. seitlich am Rahmen 11 montiert, derart, dass die von ihm ausgesandte Lichtlinie 21 auf die ihm zugekehrte Reifenseitenwand und auf den sich daran anschließenden Teil der Lauffläche des Reifens auftrifft und die Lichtlinie 20 kreuzt (Fig. 3). Auf diese Weise wird die Position einer Kerbungsstelle, an welcher die jeweilige Kontrollkerbe 19 in die Reifenlauffläche eingearbeitet wird, festgelegt (Fig. 3).

Die zweite optische Einrichtung 18 ist z. B. ebenfalls über der Lauffläche des Reifens 12 an dem Rahmen 11 der Rauhmaschine 1 montiert, um den Messstrahl 22 im Wesentlichen senkrecht auf die Reifenlauffläche 17 richten zu können. Das erste Gerät 14 der ersten optischen Einrichtung und die zweite optische Einrichtung 18 können in einem gemeinsamen Gehäuse (nicht dargestellt) untergebracht sein.

Die Rauhmaschine 1 ist ferner mit einem programmierbaren Rechner 24, der alle erforderliche Software enthält, verbunden und weist ferner einen Monitor 25, auf dem alle gewünschten Daten und bildlichen Darstellungen, z. B. das Reifenquerschnittsprofil, betrachtet werden können, auf, um Laufflächenmaterial von dem abgenutzten Reifen 12 programmgesteuert abrauhen zu können.

Nachstehend ist das Abrauhen von Reifenlaufflächenmaterial beschrieben.

Zunächst wird der Reifen in üblicher Weise in dem Rahmen 11 der Rauhmaschine 1 drehbar eingespannt. Anschließend wird die Anzahl der in die Reifenlauffläche 17 einzuarbeitenden Kontrollkerben 19 und deren Abstand voneinander gewählt und im Rechner 24 gespeichert. Beispielsweise werden fünf Kerben mit gleichmäßigem Winkelabstand voneinander gewählt, so dass der abschnittsweise Reifendrehwinkel, um die Positionen der einzuarbeitenden Kontrollkerben auf der Lauffläche des Reifens in dessen Umfangsrichtung festzulegen, 72° beträgt. Mittels der optischen Geräte 14 und 15 werden dann die optischen Lichtlinien 20 und 21 auf den Reifen projiziert und dort angezeigt, wodurch die Position der ersten Kerbungsstelle auf der Reifenlauffläche festgelegt ist. An der so vorgegebenen und festgelegten Kerbungsstelle wird die erste Kontrollkerbe 19 mittels eines Handwerkzeuges eingearbeitet und im Rechner 24 positionsmäßig gespeichert. Das Einarbeiten der Kontrollkerben erfolgt derart, dass die oberste Karkasseinlage 26a sichtbar, aber nicht zerstört wird. Dabei werden die beiden üblichen Kontrolleinlagen 26b durchtrennt (Fig. 4). Der Reifen wird nun programmgemäß um 72° weitergedreht, um die nächste Kerbungsstelle mittels der Lichtlinien 20 und 21 anzuzeigen, so dass an dieser Kerbungsstelle die zweite Kontrollkerbe 19 eingearbeitet werden kann. Diese Vorgänge setzen sich fort, bis alle fünf Kontrollkerben eingearbeitet sind.

Ein automatisches Ausmessen der eingearbeiteten Kontrollkerben 19 erfolgt mittels der zweiten optischen Einrichtung 18 zur Gewinnung von Rauhtiefen-Einstellwerten für das maschinelle Rauhwerkzeug 8. Hierzu wird der Reifen 12 gedreht, wobei die zweite optische Einrichtung 18 eine kurze Strecke vor der ankommenden Kontrollkerbe 19 zu messen beginnt und eine kurze Strecke nach dem Passieren dieser Kontrollkerbe mit dem Messen aufhört. Hierzu wird der Messstrahl 22 der zweiten optischen Einrichtung senkrecht auf die Lauffläche 17 des sich drehenden Reifens 12 gerichtet und von dem abgetasteten Laufflächenabschnitt wieder zur zweiten optischen Einrichtung reflektiert. Die von dem abgetasteten Laufflächenabschnitt reflektierten Weglängen der Messstrahlen werden erfasst und dahingehend ausgewertet, dass nur die maximale reflektierte Weglänge ausgewählt wird, die den tiefsten Punkt der jeweiligen Kontrollkerbe 19 signalisiert. Gemäß Fig. 4 wird die größte maximale Weglänge durch den Messstrahl 22a erzeugt.

Das Ausmessen der Kontrollkerben 19 erfolgt vorteilhaft bei diskontinuierlicher Reifendrehung, weil dies Zeit spart; kann aber auch bei kontinuierlicher Reifendrehung durchgeführt werden. Das diskontinuierliche Ausmessen erfolgt in Kombination mit dem Markieren von Einkerbungsstellen und dem dortigen Einarbeiten der Kontrollkerben, d. h. wenn der Reifen für das jeweils nächste Markieren und Einarbeiten weitergedreht wird, wird die zuvor eingearbeitete Kontrollkerbe ausgemessen, usw. Alternativ kann das kontinuierliche Ausmessen erst dann durchgeführt werden, wenn bereits alle Kontrollkerben eingearbeitet worden sind.

Im vorliegenden Beispiel sind auf diese Weise fünf maximale Weglängen (Abstände) zwischen dem Reifen 12 und der zweiten optischen Einrichtung 18 ermittelt worden. Diese fünf maximalen Weglängen haben jedoch einen unterschiedlichen Größenwert, und zwar aufgrund der Tatsache, dass der Reifen 12 eine Ovalität besitzt und die Kontrollkerben 19 so tief eingearbeitet worden sind, dass die oberste Karkasseinlage 26a des üblicherweise eine Vielzahl von Karkasseinlagen 26 aufweissen Reifens 12 freigelegt, jedoch nicht zerstört ist. Die so erhaltenen fünf maximalen Abstände ergeben schließlich genaue Punkte einer Steuerkurve, nach welcher der maschinelle Rauhvorgang automatisch gesteuert wird.

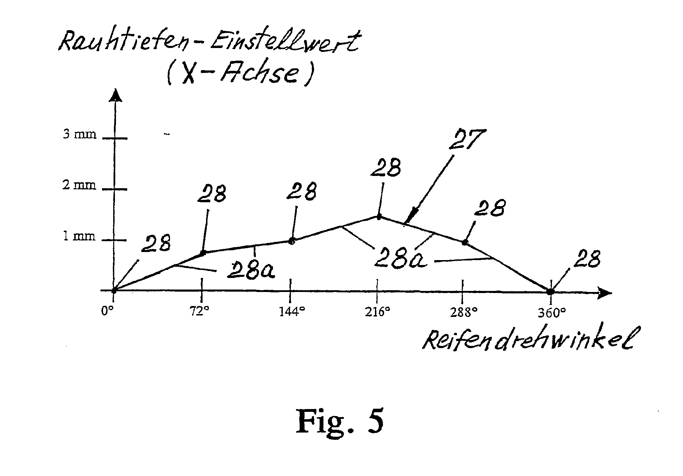

Eine beispielsweise Steuerkurve 27 ist in Fig. 5 dargestellt. Die Steuerkurve 27 ist eine Näherungskurve, deren genaueste Stellen sich an den Reifendrehwinkelpositionen 0°, 72°, 144°, 216°, 288° und 360° (0°) befinden. Zur punktuellen Festlegung der gezeigten Steuerkurve 27 werden aus den bestimmten maximalen reflektierten Weglängen Differenzwerte für jede Kontrollkerbe 19 ermittelt, indem jeweils die kleinste maximale Weglänge von allen maximalen Weglängen subtrahiert wird. Die so erhaltenen Differenzwerte ergeben genaue Punkte 28 der in Fig. 5 dargestellten Steuerkurve 27 an den vorgenannten Drehwinkelpositionen des Reifens und werden mittels des Rechners 24 ermittelt. Diese Differenzwerte werden mittels rechnergestützt erzeugter gerader Linien 28a miteinander verbunden, um den vollständigen Verlauf der Steuerkurve 27 für eine Reifenumdrehung festzulegen. Auf diese Weise wird für jeden Drehwinkel des Reifens ein korrigierender Einstellwert in Form einer kurzen Wegstrecke entlang der X-Achse für die Rauhtiefe des Reifens zur Verfügung gestellt. Dieser korrigierende Einstellwert wird den Basis-Einstellwerten für das maschinelle Rauhwerkzeug 8 überlagert, wenn der sich drehende Reifen 12 mittels dieses rotierenden Rauhwerkzeuges 8 abgerauht wird. Auf diese Weise wird der abgenutzte Reifen, der in Umfangsrichtung eine Ovalität besitzt, welche auch bei den Karkasseinlagen 26, 26a vorhanden ist, äquidistant zur obersten Karkasseinlage 26a mit einem einzigen maschinellen Rauhvorgang automatisch abgerauht, so dass über der obersten Karkasseinlage 26a Restlaufflächenmaterial mit einer gleichmäßigen Dicke verbleibt, die in Fig. 4 mit 29 gestrichelt angedeutet ist. Dabei wird das Restlaufflächenmaterial 30 des abgenutzten Reifens 12 mit einer Dicke D abgerauht.

Im Allgemeinen wird mit der Abrauhung in der Mitte der Reifenlauffläche begonnen und dann abwechselnd nach beiden Seiten dieser Mitte durchgeführt, um den gewünschten Querverlauf der Reifenlauffläche, welcher programmgemäß vorgegeben ist und rechnergestützt durchgeführt wird, zu erhalten. Die Basis-Rauhtiefe kann in mehreren Stufen, aber auch in einer einzigen Stufe eingestellt werden. Insgesamt bewegt sich das maschinelle Rauhwerkzeug 8 zunächst entlang der X-Achse zum Reifen 12, um die Basiseinstellung des Rauhwerkzeuges im Sinne einer Zustellbewegung einzunehmen. Danach bewegt sich das Rauhwerkzeug entlang der Y-Achse und gleichzeitig verschwenkt es sich um die Z-Achse, wenn die Reifenlauffläche 17, im Querschnitt betrachtet, eine nach außen gerichtete Krümmung aufweist, so dass das Rauhwerkzeug 8 noch eine Zusatzbewegung entlang der X-Achse ausführen muss, um die gewünschte Krümmung der Reifenlauffläche 17 zu erhalten. Diese Arbeitsbewegungen des Rauhwerkzeuges 8 sind jedoch Stand der Technik, demzufolge, wie bereits einleitend erwähnt, der abgenutzte und in Umfangsrichtung ovale bzw. unrunde Reifen 12 zunächst in einem ersten Rauhvorgang kreisrund abgerauht wird. Um das erfindungsgemäße, vorstehend beschriebene, automatische äquidistante Abrauhen des ovalen Reifens zu ermöglichen, wird diesen Basisbewegungen des Rauhwerkzeuges 8 entlang der X-Achse noch eine weitere Bewegung entlang dieser X-Achse überlagert, und zwar gemäß der vorstehend beschriebenen Steuerkurve 27, gemäß welcher das ovale automatische Abrauhen bewirkt wird.

Bekanntlich besteht ein Bewegungsspiel des Schlittens 5 an den Führungen 4 und damit des Rauhwerkzeuges 8 in Richtung der X-Achse. Dadurch ergeben sich Abweichungen in Richtung der X-Achse entlang der Steuerkurve 27 für das Rauhwerkzeug 8, wenn dieses seine Bewegungsrichtung umkehrt. Um diese Abweichungen von der Steuerkurve an den Umkehrstellen zu minimieren, wird dieser Steuerkurve punktuell ein Korrekturwert zugeordnet, der durch praktische Versuche auf einfache Weise ermittelt werden kann.

Das Spiel in Richtung der X-Achse macht sich also immer dann nachteilig bemerkbar, wenn sich die Bewegungsrichtung des Rauhwerkzeuges 8 umkehrt. Das ist bezüglich der beschriebenen Steuerkurve 27 bei dem hier gewählten Ausführungsbeispiel bei den Reifendrehwinkeln 216° und 360°/0° der Fall. Dieses Umkehrspiel erfolgt sprunghaft und stellt eine hohe Belastung des Antriebes für den Schlitten 5 entlang der Führungen 4 dar. Es ist daher vorteilhaft, die Wirkung dieser sprunghaften Bewegungsumkehr zu dämpfen, weshalb dem vorgenannten Korrekturwert ein Dämpfungswert in Form einer Zeitkonstanten überlagert wird. Die Zeitkonstante kann beispielsweise 100 ms betragen.

In Verbindung mit dem Dämpfungswert ergibt sich jedoch eine Nachlaufwirkung des Rauhwerkzeuges, weshalb eine weitere Korrektur in der Einstellbewegung des Rauhwerkzeuges entlang der X-Achse vorteilhaft ist. Diese weitere, sich im Sinne einer Erhöhung der Genauigkeit auf die Rauhtiefe auswirkende Korrektur, wird durch einen ersten von der Drehzahl des Reifens abhängigen Korrekturfaktor, der sich auf den Drehwinkel des Reifens bezieht, und durch einen zweiten, ebenfalls von der Drehzahl des Reifens abhängigen Korrekturfaktor, der sich auf die Rauhtiefe bezieht, vorgenommen. Der erste Korrekturfaktor, der den Drehwinkelgradwert des Reifens berücksichtigt, beträgt z. B. 0,1 ° x dem Sollwert der Reifenantriebsdrehzahl. Der Prozentwert für den zweiten Korrekturfaktor beträgt z. B. 1 + 0,002 x dem Sollwert der Reifenantriebsdrehzahl. Die genannten Korrekturfaktoren sind auch abhängig von der genannten Zeitkonstanten und bei deren bedeutender Änderung an diese anzupassen. Entsprechend der gewählten Zeitkonstanten werden dann die vorgenannten Zahlenwerte der Korrekturfaktoren verändert, wobei die Änderungswerte durch einfache Versuche schnell ermittelt werden können. Auf diese Weise werden die insgesamt nachteiligen Auswirkungen des Umkehrspiels für den Antrieb des Reifenrauhwerkzeuges 8 entlang der X-Achse auf ein Minimum reduziert.

## Patentansprüche

1. Verfahren zum maschinellen Abrauhen von abgenutzten, mit Karkasseinlagen versehenen Reifen, insbesondere Flugzeugreifen, umfassend die folgen Schritte:
- Einarbeiten von mehreren Kontrollkerben in die Lauffläche eines drehbar eingespannten Reifens im Abstand voneinander in Bezug auf dessen Umfangsrichtung mittels eines Handwerkzeuges, derart, dass die oberste Karkasseinlage des Reifens sichtbar, aber nicht zerstört wird, und
- Abrauhen von Laufflächenmaterial von dem sich drehenden Reifen mittels eines maschinellen, drehend angetriebenen Rauhwerkzeuges bei Vermeidung der Zerstörung der Karkasseinlagen, **gekennzeichnet durch** die weiteren folgenden Schritte:
- Anzeigen von optischen Markierungen auf dem Reifen zum Festlegen von bezüglich des Reifendrehwinkels gespeicherten Kerbungspositionen auf der Reifenlauffläche und Einarbeiten der Kontrollkerben in die Lauffläche an den optisch markierten Kerbungspositionen.
- automatisches optisches Ausmessen der eingearbeiteten Kontrollkerben zur Bestimmung von Rauhtiefen-Einstellwerten und
- automatisch gesteuertes Abrauhen von Laufflächenmaterial des Reifens in einem einzigen Rauhvorgang nach den bestimmten Rauhtiefen-Einstellwerten

2. Verfahren nach Anspruch 1, **dadurch gekennzeichnet, dass** Anzahl und Winkelposition der Kontrollkerben gewählt und gespeichert werden und dass entsprechend der gewählten Anzahl und Winkelposition der Kontrollkerben gleich viele optische Markierungen auf der abgenutzten Lauffläche des Reifens unter Drehung desselben angezeigt, die angezeigten Markierungen den gewählten Winkelpositionen für die Kontrollkerben zugeordnet werden und diese Zuordnung gespeichert wird.

3. Verfahren nach Anspruch 1 oder 2, **dadurch gekennzeichnet, dass** die Kontrollkerben während des sich drehenden Reifens zum Erhalt von Messdaten von deren tiefstem Punkt optisch ausgemessen werden und diese Messdaten zum Bestimmen der Einstellwerte für die Rauhtiefen-Einstellbewegung des Rauhwerkzeuges rechnergestützt ausgewertet werden.

4. Verfahren nach Anspruch 1, 2 oder 3, **dadurch gekennzeichnet, dass** zum Anzeigen der optischen Markierungen auf der Reifenlauffläche und zum optischen Ausmessen der Kontrollkerben Laserstrahlen verwendet werden.

5. Verfahren nach einem der Ansprüche 1 bis 4, **dadurch gekennzeichnet, dass** zum Anzeigen der jeweiligen optischen Markierung auf der Reifenlauffläche eine erste optische Linie, die innerhalb der senkrecht zur Reifendrehachse verlaufenden Reifenmittelebene verläuft, und eine zweite optische Linie, welche die erste optische Linie kreuzt, verwendet werden.

6. Verfahren nach einem der Ansprüche 1 bis 5, **dadurch gekennzeichnet, dass** zum optischen Ausmessen der Kontrollkerben ein optischer Messstrahl senkrecht auf ausgewählte Laufflächenabschnitte des Reifens, die eine Kontrollkerbe enthalten, gerichtet wird, wobei die Kontrollkerbe während der Drehung des Reifens überquert wird, und dass die von diesen Laufflächenabschnitten reflektierten Weglängen der Messstrahlen erfasst und zum Bestimmen der maximalen reflektierten Weglänge, die den tiefsten Punkt der jeweiligen Kontrollkerbe signalisiert, von jedem Laufflächenabschnitt ausgewertet werden.

7. Verfahren nach Anspruch 6, **dadurch gekennzeichnet, dass** aus den bestimmten maximalen reflektierten Weglängen Differenzwerte für jede Kontrollkerbe ermittelt werden, indem jeweils die kleinste maximale Weglänge von allen maximalen Weglängen subtrahiert wird, und dass die so ermittelten Differenzwerte zur Bestimmung einer Steuerkurve für die Steuerung der die Rauhtiefe bewirkenden Einstellbewegung des maschinellen Rauhwerkzeuges verwendet werden.

8. Verfahren nach Anspruch 7, **dadurch gekennzeichnet, dass** die Differenzwerte mittels rechnergestützt erzeugter gerader Linien miteinander verbunden werden, um den vollständigen Verlauf der Steuerkurve für eine Reifenumdrehung festzulegen, so dass für jeden Drehwinkel des Reifens ein rechnergestützt bestimmter Rauhtiefen-Einstellwert zur Verfügung gestellt wird, der dem Basis-Einstellwert für das maschinelle Rauhwerkzeug überlagert wird.

9. Verfahren nach Anspruch 7 und 8, **dadurch gekennzeichnet, dass** für die Minimierung von Abweichungen von der Steuerkurve aufgrund von Bewegungsumkehrungen des Rauhwerkzeuges in Richtung seiner für die Rauhtiefe vorgesehenen Einstellachse ein Korrekturwert verwendet und der Steuerkurve überlagert wird.

10. Verfahren nach Anspruch 9, **dadurch gekennzeichnet, dass** in Verbindung mit dem Korrekturwert ein Dämpfungswert in Form einer Zeitkonstanten verwendet wird.

11. Verfahren nach Anspruch 10, **dadurch gekennzeichnet, dass** in Verbindung mit dem Dämpfungswert eine weitere Korrektur zum Ausgleich der Nachlaufwirkung der gedämpften axialen Hin- und Herbewegung des maschinellen Rauhwerkzeuges vorgenommen wird.

12. Verfahren nach Anspruch 11, **dadurch gekennzeichnet, dass** die weitere Korrektur durch einen ersten von der Drehzahl des Reifens abhängigen Korrekturfaktor, betreffend den Drehwinkel des Reifens, und durch einen zweiten von der Drehzahl des Reifens abhängigen Korrekturfaktor, betreffend die Rauhtiefe, vorgenommen wird.

13. Verfahren nach Anspruch 12, **dadurch gekennzeichnet, dass** der Drehwinkelgradwert für den ersten Korrekturfaktor 0,1° x dem Sollwert der Reifenantriebsdrehzahl beträgt.

14. Verfahren nach Anspruch 12, **dadurch gekennzeichnet, dass** der Prozentwert für den zweiten Korrekturfaktor 1 + 0,002 x dem Sollwert der Reifenantriebsdrehzahl beträgt.

15. Rauhmaschine zum Abrauhen von Laufflächenmaterial von abgenutzten Reifen, insbesondere Flugzeugreifen, zur Vorbereitung derselben für die Reifenrunderneuerung, aufweisend
- einen Maschinenrahmen mit einer drehbar angetriebenen Einrichtung zum Einspannen und Drehen eines abzurauhenden Reifens und
- ein maschinelles, drehbar antreibbares Rauhwerkzeug zum Abrauhen von Reifenlaufflächenmaterial, wobei das Rauhwerkzeug in Bezug auf drei im rechten Winkel zueinander stehende Arbeitsachsen führbar und rechnergestützt automatisch steuerbar ist, zur Durchführung des Verfahrens nach einem der Ansprüche 1 bis 14, **gekennzeichnet durch**:
- eine erste optische Einrichtung (14, 15) zur Erzeugung und Anzeige einer optischen Markierung (20, 21) auf dem Reifen zur Festlegung von Kerbungspositionen für dort einzuarbeitende Kontrollkerben,
- eine zweite optische Einrichtung (18) zum automatischen Ausmessen der eingearbeiteten Kontrollkerben und
- eine programmierbare Rechnereinrichtung (24) zum Auswerten von Messdaten der zweiten optischen Einrichtung (18) und Bestimmen von die Rauhtiefe steuernden Einstellwerten für das maschinelle Rauhwerkzeug (8) unter Verwendung dieser Messdaten.

16. Rauhmaschine nach Anspruch 15, **dadurch gekennzeichnet, dass** die erste optische Einrichtung (14, 15) zur Erzeugung einer Kreuzmarkierung auf der Reifenlauffläche ein erstes Gerät (14) zum Erzeugen einer ersten Lichtlinie (20) und ein zweites Gerät (15) zum Erzeugen einer zweiten, die erste Lichtlinie kreuzenden Lichtlinie (21) aufweist.

17. Rauhmaschine nach Anspruch 16, **dadurch gekennzeichnet, dass** die beiden Geräte zum Erzeugen der jeweiligen Lichtlinie aus Lasergeräten bestehen.

18. Rauhmaschine nach Anspruch 15 oder 16, **dadurch gekennzeichnet, dass** die zweite optische Einrichtung (18) ein Reflektionsmessgerät ist, das einen Messstrahl (22 a) aussendet und diesen nach Reflexion von der Reifenlauffläche (12) empfängt.

19. Rauhmaschine nach Anspruch 18, **dadurch gekennzeichnet, dass** die zweite optische Einrichtung (18) zum Auswerten der reflektierten Messstrahlen (22, 22a) und Weiterleiten des längsten reflektierten Messstrahls an einen Rechner (24) zur weiteren Verarbeitung ausgebildet ist.

20. Rauhmaschine nach Anspruch 18, **dadurch gekennzeichnet, dass** das Reflektionsmessgerät (18) ein Lasergerät ist.

## Claims

1. A method for the mechanical roughening of worn-down tyres provided with carcass inlays, in particular aircraft tyres, comprising the following steps:
- incorporating several control scores into the tread of a rotatably clamped tyre at a distance to one another with respect to its peripheral direction, by way of a hand tool, in a manner such that the uppermost carcass inlay of the tyre is visible, but is not destroyed, and
- roughening tread material from the rotating tyre by way of a mechanical, rotatably driven roughening tool whilst avoiding the destruction of the carcass inlays, **characterised by** the further following steps:
- displaying optical markings on the tyre for fixing score positions on the tyre tread which are stored with respect to the rotational angle of the tyre, and incorporating the control scores into the treads at the optically marked scoring positions
- automatic, optical measurement of the incorporated control scores for determining roughness depth setting values and
- automatically controlled roughening of tread material of the tyre in a single roughening procedure according to the determined roughness depth setting values.

2. A method according to claim 1, **characterised in that** the number and angular position of the control scores are selected and stored and that according to the selected number and angular position of the control scores, the same number of optical markings on the worn tread of the tyre are displayed whilst rotating this, the displayed markings are allocated to the selected angular positions for the control scores, and this allocation is stored.

3. A method according to claim 1 or 2, **characterised in that** the control scores during the rotation of the tyre are optically measured for obtaining measurement data of their deepest point, and this measurement data is evaluated in a computer-assisted manner for determining the setting values for the roughness depth setting movement of the roughening tool.

4. A method according to claim 1, 2 or 3, **characterised in that** laser beams are used for displaying the optical markings on the tyre tread and for the optical measurement of the control scores.

5. A method according to one of the claims 1 to 4, **characterised in that** a first optical line which runs within the tyre middle plane running perpendicularly to the tyre rotational axis, and a second optical line, which crosses the first optical line, are used for displaying the respective optical marking on the tyre tread.

6. A method according to one of the claims 1 to 5, **characterised in that** an optical measurement beam is directed perpendicularly onto selected tread section of the tyre, which contain a control score, for the optical measurement of the control scores, wherein the control score is crossed during the rotation of the tyre, and that the path lengths of the measurement beams, which are reflected by these tread sections, are detected, and evaluated from each tread section for determining the maximal reflected path length which signalises the deepest point of the respective control score.

7. A method according to claim 6, **characterised in that** difference values are evaluated for each control score from the determined, maximal, reflected path lengths, **in that** in each case the smallest maximal path length is subtracted from all maximal path lengths, and that the thus determined difference values are used for determining a control curve for the control of the setting movement of the mechanical roughening tool, said movement effecting the roughness depth.

8. A method according to claim 7, **characterised in that** the difference values are connected to one another by way of straight lines produced in a computer-assisted manner, in order to fix the complete course of the control curve for a tyre revolution, so that a roughness depth setting value determined in a computer-assisted manner is provided for each rotational angle of the tyre, said value being superimposed on the base setting value for the mechanical roughening tool.

9. A method according to claim 7 and 8, **characterised in that** for the minimisation of deviations from the control curve on account of movement reversals of the roughening tool in the direction of its setting axis provided for the roughness depth, one uses a correction value and this is superimposed on the control curve.

10. A method according to claim 9, **characterised in that** a damping value in the form of a time constant is used in combination with the correction value.

11. A method according to claim 10, **characterised in that** in combination with the damping value, a further correction for compensating the post-running effect of the damped, axial to-and-fro movement of the mechanical roughening tool is carried out.

12. A method according to claim 11, **characterised in that** the further correction is carried out by way of a first correction factor concerning the rotational angle of the tyre, said first correction factor being dependent on the rotational speed of the tyre, and by a second correction factor concerning the roughness depth, which is dependent on the rotational speed of the tyre.

13. A method according to claim 12, **characterised in that** the rotational angle degree value for the first correction factor is 0.1 ° x the nominal value of the tyre drive rotational speed.

14. A method according to claim 12, **characterised in that** the percent value for the second correction factor is 1 + 0.002 x the nominal value of the tyre drive rotational speed.

15. A roughening machine for roughening tread material from worn tyres, in particular aircraft tyres, for preparing these for tyre retreading, comprising
- a machine frame with a rotatably driven device for clamping and rotating a tyre to be buffed and
- a mechanical, rotatably driven roughening tool for roughening tyre tread material, wherein the roughening tool may be guided and automatically controlled in a computer-assisted manner with regard to three working axes standing at right angles to one another, for carrying out the method according to one of the claims 1 to 14, **characterised by**:
- a first optical device (14, 15) for the production and the display of an optical marking (20, 21) on the tyre for fixing scoring positions for control scores to be incorporated there,
- a second optical device (18) for the automatic measurement of the incorporated control scores and
- a programmable computer device (24) for evaluating measurement data of the second optical device (18) and for determining the setting values for the mechanical roughening tool (8), which control the roughness depth, whilst using this measurement data.

16. A roughening machine according to claim 15, **characterised in that** the first optical device (14, 15) for producing a cross marking on a tyre tread comprises an first apparatus (14) for producing a first light line (20) and a second apparatus (15) for producing a second light line (21) crossing the first light line.

17. A roughening machine according to claim 16, **characterised in that** the two apparatus for producing the respective light line consist of laser apparatus.

18. A roughening machine according to claim 15 or 16, **characterised in that** the second optical device (18) is a reflection measurement apparatus, which emits a measurement beam (22a) and receives this after reflection from the tyre tread (12).

19. A roughening machine according to claim 18, **characterised in that** the second optical means (18) is designed for evaluating the reflected measurement beams (22, 22a) and leading further the longest reflected measurement beam to a computer (24) for further processing.

20. A roughening machine according to claim 18, **characterised in that** the reflection measurement apparatus (18) is a laser apparatus.

## Revendications

1. Procédé pour râper à la machine des pneus usés munis de nappes de carcasse, en particulier des pneus d'avion, comprenant les étapes suivantes :
- pratiquer plusieurs entailles de contrôle dans la bande de roulement d'un pneu monté en rotation, à distance les unes des autres par rapport à la direction périphérique du pneu au moyen d'un outil à main, de telle façon que la nappe de carcasse supérieure extrême du pneu soit visible mais non détruite, et
- râper du matériau de bande de roulement du pneu en rotation au moyen d'un outil à râper mécanique, entraîné en rotation, dans le cas où la destruction des nappes de carcasse est évitée, **caractérisé par** les étapes supplémentaires suivantes :
- affichage de marquages optiques sur le pneu pour détermination de positions d'entaille, mémorisées relativement à l'angle de rotation du pneu, sur la bande de roulement du pneu et exécution d'entailles de contrôle dans la bande de roulement au niveau des positions d'entaille marquées de manière optique.
- mesurage optique automatique des entailles de contrôle pratiquées pour déterminer les valeurs de réglage de la profondeur de râpage, et
- râpage, commandé automatiquement, de matériau de bande de roulement du pneu en une seule opération de râpage en fonction des valeurs déterminées de réglage de la profondeur de râpage.

2. Procédé selon la revendication 1, **caractérisé en ce que** le nombre et la position angulaire des entailles de contrôle sont sélectionnés et mémorisés et qu'en fonction du nombre et de la position angulaire sélectionnés des entailles de contrôle, un nombre correspondant de marquages optiques s'affiche sur la bande de roulement usée du pneu lorsque celui-ci est en rotation, **en ce que** les marquages affichés sont associés aux positions angulaires sélectionnées des entailles de contrôle et **en ce que** cette correspondance est mémorisée.

3. Procédé selon la revendication 1 ou 2, **caractérisé en ce que** les entailles de contrôle sont mesurées optiquement pendant la rotation du pneu, pour obtention de données de mesure de leur point le plus bas et que ces données de mesure sont exploitées de manière assistée par calculateur pour déterminer les valeurs de réglage pour le mouvement de réglage de la profondeur de râpage de l'outil de râpage.

4. Procédé selon la revendication 1, 2 ou 3, **caractérisé en ce que** des rayons laser sont utilisés pour l'affichage des marquages optiques sur la bande de roulement du pneu et pour le mesurage optique des entailles de contrôle.

5. Procédé selon l'une des revendications 1 à 4, **caractérisé en ce que**, pour l'affichage de chaque marquage optique sur la bande de roulement du pneu, sont utilisées une première ligne optique qui s'étend à l'intérieur du plan médian du pneu perpendiculairement à l'axe de rotation du pneu et une seconde ligne optique qui croise la première ligne optique.

6. Procédé selon l'une des revendications 1 à 5, **caractérisé en ce que**, pour le mesurage optique des entailles de contrôle, un faisceau de mesure optique est dirigé perpendiculairement sur des tronçons sélectionnés de la bande de roulement du pneu qui contiennent une entaille de contrôle, l'entaille de contrôle étant traversée pendant la rotation du pneu, et **en ce que** les chemins optiques des faisceaux de mesure réfléchis par ces tronçons de bande de roulement sont détectés et exploités à partir de chaque tronçon de bande de roulement, pour détermination du chemin optique maximum réfléchi qui signale le point le plus bas de chaque entaille de contrôle.

7. Procédé selon la revendication 6, **caractérisé en ce que**, à partir des chemins optiques réfléchis maximaux tels que définis, des valeurs différentielles sont déterminées pour chaque entaille de contrôle en soustrayant respectivement le plus petit chemin optique maximal de tous les chemins optiques maximaux, et **en ce que** les valeurs différentielles ainsi déterminées sont utilisées pour définir une courbe pour la commande du mouvement de réglage réalisant la profondeur de râpage de l'outil de râpage mécanique.

8. Procédé selon la revendication 7, **caractérisé en ce que** les valeurs différentielles sont reliées entre elles au moyen de lignes droites générées de manière assistée par calculateur, pour déterminer la trajectoire complète de la courbe de commande pour une rotation du pneu de sorte que, pour chaque angle de rotation du pneu, est mise à disposition une valeur de réglage de la profondeur de râpage définie de manière assistée par calculateur, qui est superposée à la valeur de réglage de base de l'outil de râpage mécanique.

9. Procédé selon la revendication 7 et 8, **caractérisé en ce que**, pour minimiser les écarts par rapport à la courbe de commande, dus à des inversions du mouvement de l'outil de râpage en direction de son axe de réglage prévu pour la profondeur de râpage, une valeur de correction est utilisée et superposée à la courbe de commande.

10. Procédé selon la revendication 9, **caractérisé en ce que**, en liaison avec la valeur de correction, une valeur d'amortissement est utilisée sous la forme d'une constante de temps.

11. Procédé selon la revendication 10, **caractérisé en ce que**, en liaison avec la valeur d'amortissement, une correction supplémentaire est réalisée pour compenser l'effet de rattrapage du mouvement amorti de va-et-vient axial de l'outil de râpage mécanique.

12. Procédé selon la revendication 11, **caractérisé en ce que** la correction supplémentaire est effectuée au moyen d'un premier coefficient de correction dépendant de la vitesse de rotation du pneu, en ce qui concerne l'angle de rotation du pneu et au moyen d'un deuxième coefficient de correction dépendant de la vitesse de rotation du pneu, en ce qui concerne la profondeur de râpage.

13. Procédé selon la revendication 12, **caractérisé en ce que** la valeur en degré de l'angle de rotation pour le premier coefficient de correction, est de 0,1° x la valeur théorique de la vitesse d'entraînement en rotation du pneu.

14. Procédé selon la revendication 12, **caractérisé en ce que** la valeur en pourcentage pour le deuxième coefficient de correction est de 1 + 0,002 x la valeur théorique de la vitesse d'entraînement en rotation du pneu.

15. Machine pour râper le matériau de la bande de roulement de pneus usés, en particulier de pneus d'avion, afin de préparer ceux-ci pour le rechapage, présentant
- un bâti de machine équipé d'un dispositif entraîné en rotation pour serrer et faire tourner un pneu destiné à être râpé, et
- un outil de râpage mécanique, apte à être entraîné en rotation pour le râpage de matériau de bande de roulement de pneus, l'outil de râpage étant apte à être guidé en référence à trois axes de travail orthogonaux les uns par rapport aux autres et apte à être commandé automatiquement de manière assistée par calculateur, pour réaliser le procédé selon l'une des revendications 1 à 14, **caractérisé par** :
- un premier système optique (14, 15) pour générer et afficher un marquage optique (20, 21) sur le pneu afin de déterminer des positions d'entaille pour les entailles de contrôle devant y être pratiquées,
- un second système optique (18) pour mesurage automatique des entailles de contrôle pratiquées, et
- un système de calculateur programmable (24) pour l'exploitation des données de mesure du second système optique (18) et détermination des valeurs de réglage commandant la profondeur de râpage pour l'outil de râpage mécanique (8) en utilisant ces données de mesure.

16. Machine à râper selon la revendication 15, **caractérisée en ce que** le premier système optique (14, 15) permettant de générer un marquage en croix sur la bande de roulement du pneu, comporte un premier dispositif (14) pour générer un premier trait lumineux (20) et un deuxième dispositif (15) pour générer un deuxième trait lumineux (21) croisant le premier trait lumineux.

17. Machine à râper selon la revendication 16, **caractérisée en ce que** les deux dispositifs destinés à générer chaque trait lumineux sont des appareils à laser.

18. Machine à râper selon la revendication 15 ou 16, **caractérisée en ce que** le second système optique (18) est un appareil de mesure de réflexion qui émet un rayon de mesure (22a) et reçoit celui-ci après réflexion par la bande de roulement du pneu (12).

19. Machine à râper selon la revendication 18, **caractérisée en ce que** le second système optique (18) est réalisé pour exploiter les rayons de mesure réfléchis (22, 22a) et transmettre le rayon de mesure réfléchi le plus long à un calculateur (24) pour traitement ultérieur.

20. Machine à râper selon la revendication 18, **caractérisée en ce que** l'appareil de mesure de réflexion (18) est un appareil à laser.
